# EUROPEAN PATENT SPECIFICATION

(11) **EP 2 643 197 B1**
(45) Date of publication and mention of the grant of the patent: **08.01.2020**
(21) Application number: 10787022.2
(22) Date of filing: 26.11.2010
(51) Int. Cl.: B60T 17/22, F16D 65/14, F16D 66/02, F16D 66/00

(54) **BRAKE MONITORING DEVICE AND COMPONENTS ASSOCIATED THEREWITH**
BREMSÜBERWACHUNGSVORRICHTUNG SOWIE ZUGEHÖRIGE KOMPONENTEN
DISPOSITIF DE SURVEILLANCE DE FREIN ET COMPOSANTS ASSOCIÉS À CELUI-CI

(43) Date of publication of application: 02.10.2013
(73) Proprietor: Haldex Brake Products AB, 261 24 Landskrona (SE)
(72) Inventor: SEGLÖ, Fredrik, S-26040 Viken (SE); LARSSON, Anders, S-25656 Helsingborg (SE)
(74) Representative: Habermann, Hruschka & Schnabel
(86) International application number: PCT/EP2010/007192
(87) International publication number: WO 2012/069068

(56) References cited:
- WO-A1-96/41970
- DE-A1- 4 212 279
- DE-A1- 19 622 545
- US-A1- 2004 112 684

## Description

The present invention refers to a brake monitoring device to be employed in brake mechanisms of different kind. Further, the invention refers to a drum brake and a disc brake, respectively, which comprise such a brake monitoring device. Several components of brake actuating mechanisms, which cooperate which such a brake monitoring device, are considered by this invention as well.

In vehicle brakes, at least one rotor connected to a wheel is braked by friction elements to be applied to the rotor during brake actuation. In drum brakes, brake shoes are radially and tangentially moved towards the rotating drum, the brake shoes being arranged inside the drum and spread by means of a S-cam in fixed connection with a shaft, which shaft is set into rotation by a lever.

In some kind of disc brakes a brake pad at the end of at least one thrust element is pushed towards the brake disc, the thrust element being actuated by a lever.

In both brake mechanism types, the actuator could use either pneumatic, hydraulic or electric principles. The lever will be applied to the S-cam shaft of a drum brake or to the thrust element of a disc brake and causes a brake actuation stroke of these components upon brake actuation, whereby a release stroke of these components upon release of the brake in the reverse direction usually is supported by return spring mechanisms.

In drum brakes such brake actuation stroke is performed by the brake shoes radially converging towards the inner surface of the rotating brake drum and finally engaging therewith. In disc brakes the stroke is performed by the thrust element which thereby substantially axially linearly displaces towards the brake disc. In other words, the brake actuation or release stroke is performed by components of the brake actuation mechanism containing the brake lining and corresponds to the distances these components can traverse in actuation and release direction.

Accordingly, a large stroke might be indicative of some kind of malfunction of the brake mechanism. Reasons for too large stroke could result from defective automatic slack adjusters, from a too large wear of the linings of the brake pads or brake shoes or from any other reasons.

A too short stroke may appear e.g. when the actuating cylinder does not work or when the brake is not properly released due to failing return mechanism.

Therefore, for safety reasons, there is the need to monitor and detect somehow the brake actuation and/or release stroke, since an excessive stroke indicates either a breakdown of the brake actuating mechanism including the adjuster mechanism on the one hand or a need to replace the brake linings due to wear on the other, and, moreover, since a shortened stroke indicates a breakdown of either the actuating cylinder or of the return mechanism.

Currently, three different measuring principles have been used for that purpose in the state of the art.

For example, several indicators may simply provide an alarm signal to the driver or to superior control systems when the stroke exceeds a predetermined length. Such indicators are often based on switches governed by magnetic or mechanical means. Although, they prove to be rather cost effective, such monitoring devices need proper adjustment at installation and at overhaul, which in turn increases the costs.

Another principle refers to the detection of the actually existing stroke. Sensors to be used for such a quantitative detection method provide signals which reflect the linear travel (disc brakes) or angular travel (drum brakes) with good accuracy. However, such sensors prove to be too expensive when only excessive stroke shall be determined.

Examples of prior art monitoring systems of that kind can be seen from e.g. US 5,433,296 or US 7,398,141 B2.

A third principle refers to the measurement of the actual lining wear status of the different brake pads or shoes. Sensors for that purpose are mainly used together with sophisticated brake control systems which are applied to level out the lining wear between different brakes on the vehicle in dynamic vehicle control systems. Also, such sensors are considered to be rather too expensive for simple tasks for monitoring the stroke.

Examples of prior art monitoring systems of that kind can be seen from e.g. US 5,339,069 or US 2009/0050418 A1 or DE 195 34 854 A1.

DE 196 22 545 A1 discloses a movement measuring device which senses changes in magnetic field in the air gap between components produced by magnets mounted on moving components.

For most safety purposes, and sometimes even encouraged by government authorities, it is enough to monitor the brake actuation stroke with a certain approximate accuracy, which does not provide the exact actual stroke value, i.e. it may be enough to provide a qualitative rather than a quantitative indication of the actually existing stroke.

Based on the above, it is an objective of the present invention to provide a simple brake monitoring system for a brake mechanism which brake monitoring system functions in a reliable and efficient way, which is cost effective and which is easy to mount.

Such objective is solved by a brake monitoring device according to claim 1. Furthermore, such objective is solved by a drum brake according to claim 14 and a disc brake according to claim 24, respectively. The new design of several components of brake actuating mechanisms, such as brake lever, control arm and cover, contributes to the solution of the problems.

The invention provides a brake monitoring device for detecting a value indicative of the actuation stroke and/or release stroke of a thrust element of a brake actuating mechanism, the thrust element being actuated by a lever of said brake actuating mechanism, comprising a sensor for sensing variations in a physical property of at least one part of said brake actuating mechanism, whereby the sensor and said part of the brake actuating mechanism are arranged so that by the relative movement between said part of the brake actuating mechanism and the sensor repeated variations in said physical property along a path of said relative movement are created and sensed, whereby said path is formed between, i.e. along one of the lever and a stationary part being adjacent to said lever.

Accordingly, the sensor to be used in the brake monitoring device according to the invention is configured and arranged to count the number of these repeated variations in the form of pulses within the time span for a normal brake actuation or brake release. If the number of pulses exceeds or falls below a preset number of pulses to be predefined for the respective time span, an alert signal is generated, which could be supplied either to a driver or to a superior control system.

Thus, there is no need to accurately detect the physical quantity of concern, it will be simply enough to use a sensor in the brake monitoring device according to the invention which is capable of distinguishing between two well separated quantities. Accordingly, the sensor element which is to be employed in the brake monitoring device must only have a simple sensing structure and therefore will be inexpensive.

Furthermore, one peculiar advantage of the sensing principle to be embodied by the present invention in a brake monitoring device is that it does not require any reference points, so that there is no need to properly install and adjust the sensor relative to the path of the repeated variations. Also, no electronic adjustment in the superior control system or in its software becomes necessary. By that, installations and overhauls will become easier and more cost effective. Furthermore, one possible failure mode associated with a non exact positional installation, as known from other more accurate measurement principles, can be eliminated by the system according to the present invention.

The physical property for the repeated variations can be selected from parameters such as magnetic field, electric resistance, electric capacitance, electric inductance and/or surface structure etc..

Preferably, the repeated variations are uniformly and equidistantly distributed along the path.

According to the invention, the repeated variations in surface structure comprise variations in geometry. Such variations along the path could include a series of recesses or slots or teeth. The path, depending on the place of arrangement of the brake monitoring device relative to the stationary part, could be arc-shaped or linear.

In a preferred embodiment, the component comprising the path is metallic and at least one magnet is arranged in the vicinity of the repeated variations so as to create a varying strength of a magnetic field in accordance with said repeated variations. The magnet generates a magnetic flux in the metallic material portions of the path, e.g. in the teeth (or in the sections between the slots), whereas in the recesses between the teeth (or in the slots) no magnetic flux is generated. Thus, the magnetic flux is always concentrated in the material portions of the repeated variations and the magnetic field resulting therefrom could be measured. Accordingly, a magnetic sensor then counts the variations in the magnetic field close to the path having the repeated slots or teeth.

Preferably, the magnet and the magnetic sensor are arranged inside a self-contained housing, which housing could be located relative to the path, accordingly.

Alternatively, the path could also comprise a series of permanent magnets, which will then be detected by a corresponding sensor.

With respect to the arrangement, the repeated variations could either be arranged at the lever or at a part of a self-contained lever assembly and the sensor could be arranged at the stationary part being adjacent to said lever, or the repeated variations are arranged at the stationary part being adjacent to said lever and the sensor is arranged at the lever or at a part of a self-contained lever assembly.

Furthermore, in this respect the repeated variations could be formed in such a way so as to be integral with the lever (or the part of a self-contained lever assembly) or with the stationary part being adjacent to said lever. Alternatively, the repeated variations could be formed by a separate element to be attached to the lever (or to the part of a self-contained lever assembly) or to the stationary part being adjacent to said lever. Such separate part could be a linear or arc-shaped metallic plate or stripe comprising the series of slots or teeth or the permanent magnets and will be attached to the respective part of these two components between which the path is to be formed.

For example, the stationary part being adjacent to said lever could be a part of a caliper, in case the brake monitoring device is used in disc brakes, or of an underframe part of a vehicle such as an anchor bracket, in case the brake monitoring device is used in drum brakes.

Brake assemblies most often comprise automatic slack adjusters for the compensation of the lining wear. The sensor for the brake monitoring device according to the invention first of all shall be mounted and configured to sense the relative travel between components in the brake assembly moving relative to each other at brake actuation only. However, as already mentioned above, the applied sensing principle does not require any reference points. Therefore, the sensor could be also mounted in a component of the brake assembly travelling during the brake actuation stroke as well as during lining wear compensation. One further advantage of the brake monitoring device according to the invention for that case is that no extra detection of the brake status is required, i.e. whether the brake is applied or not.

For the latter purpose it is advantageous to use means for generating a pulse of extra strength, e.g. double strength, somewhere near the end of the path in order to alert the driver or the superior system that the total travel has reached a value reflecting almost completely worn out linings of the brake pads or brake shoes. Accordingly, the path of the repeated variations comprises at least one additional irregular variation for determining a particular position of the actuation and/or release stroke, which position stands for a critical lining wear condition.

Furthermore, such irregular variation could be used as an indication of an unusual extra long stroke which will be safety hazardous. By means of such simple principle the superior control system does not have to exclusively rely on its software monitoring algorithms programmed for that event.

As becomes apparent from the above description, the brake monitoring device according to the invention generally proves to be very simple and cost efficient. Its functioning is reliable as no complicated algorithms have to be used for signal processing. The brake monitoring device can be used in connection with all kind of brakes and can be installed on all types of vehicles, from passenger cars to heavy road vehicles like trucks, buses and trailers. Due to the very easy sensing principle which indicates to a driver or a control system brake and release strokes beyond a predefined scale without the need to specify the exact quantity of it, installation of the brake monitoring device according to the invention on a large share of vehicles will contribute to a generally improved road safety.

Further, the invention refers to a drum brake which comprises a brake monitoring device as described before.

In drum brakes, a brake lever is mounted to a S-cam shaft with one end and is connected to a brake cylinder with its other free end, as this is well known in the art. Opposite to its end connected with a piston of a brake cylinder, the lever comprises a housing which receives an automatic slack adjuster which itself is connected by other components to the S-cam shaft. The automatic slack adjuster requires for its function a reference control signal. This reference is provided by a control arm which at one side is fixedly connected to a fix point on the vehicle underframe, normally by means of an anchor bracket, and which is pivotally connected to the brake lever at its other side.

The anchor bracket is used as a reference to measure the angular travel of the automatic slack adjuster of the drum brake during a brake application cycle in order to enable the automatic slack adjuster to adjust the brake lining, i.e. the brake shoes, to the drum clearance resulting from wear. At least one side of the housing is closed by a cover, usually made of specifically formed sheet metal.

According to one embodiment of the invention, in a drum brake, the cover of the housing comprises the path for the repeated variations, whereas the sensor is attached to the control arm.

As the cover is made of sheet metal, the invention has the advantage in that during manufacture of the sheet metal, by way of punching, stamping and bending etc., already the repeated variations in the form of slots or teeth could be provided at a corresponding location of the cover. Preferably, the path with the repeated variations is located as a half circle opposite to the free end of the brake lever. As the control arm is fixed to the underframe of the vehicle, it remains stationary, whereas the lever is rotating relative to it. Accordingly, the repeated variations of the cover of the housing of the lever will travel back and forth relative to the sensor attached to the control arm upon brake actuation and brake release movement of the lever. The sensor design is such that its housing can be clipped by corresponding fixation elements to the control arm. The housing may contain both the sensor and the magnet and, if applicable, corresponding electronics.

In one embodiment, the cover of the housing comprises a series of slots or teeth in the plane of its surface. However, it is also possible that the repeated variations are located on the arc-shaped underside of the lever opposite to its free end, i.e. perpendicular to the cover, whereby the arc-shaped path for that could be either provided integrally with the cover or it could be attached to the underside of the cast lever as a separately formed arc-shaped element. Ideally, this element comprises a series of recesses or slots. It is also possible that the repeated variations, such as teeth, are integral with the lever casting at the underside of it.

It is also possible that the sensor will be attached to the cover of the housing and that in turn the control arm comprises the path of the repeated variations. For that purpose, the sensor housing will be arranged above the control arm and the series of teeth or slots will be arranged as an arc on the upper half circle of the control arm.

For both cases it becomes apparent that the cover of the housing or the control arm integrally comprising the repeated variations can be easily and cost effectively manufactured in the common punching and stamping steps.

Accordingly, the invention also refers to a brake lever for drum brakes which comprises such path for repeated variations of a brake monitoring device.

Moreover, the invention refers to a disc brake which comprises a brake monitoring device as described before.

In disc brakes a lever, pivotally supported in a caliper activates at least one thrust element, which thrust element is displaceably guided in the caliper to be moved towards the brake disc upon brake actuation, as this is well known in the art. The thrust element could be a cross bar, a single tappet or similar.

According to the invention, the brake lever for disc brakes comprises the path of the repeated variations, ideally on a lateral surface of it. The sensor is located inside the caliper at a corresponding location in the area of the lever support.

As the brake lever usually is cast or forged as one piece, the repeated variations could be made during the casting or forging process as a series of dents. Alternatively, permanent magnets could be fixed to the lateral surface. On it, the repeated variations are forming an arc, which upon swivelling of the lever travels over the sensor which is stationary inside the caliper.

Accordingly, the invention also refers to a brake lever for disc brakes which comprises such path for repeated variations of a brake monitoring device.

The invention both for the application in drum brakes and in disc brakes is advantageous in several aspects.

The sensing principle of simply counting pulses and comparing the counted number of pulses with predetermined limits requires no sophisticated signal processing routines, so that inexpensive electronics can be used.

A major advantage is that the brake monitoring device will be arranged in the vicinity of the brake lever or directly at or on it, so that the sensor element used will be not exposed to high temperatures which occur near the brake drum and the brake disc, respectively.

For instance, in drum brakes, if the sensor element is located inside the brake drum, the sensor element with its cables would need a high temperature specification. If extremely high temperatures occur in the brake drum due to some kind of brake failure, there is the risk that the sensor element with its cables will be destroyed.

The same problems with respect to heat problems do come true for disc brakes in a similar way.

The measure according to the invention to arrange the brake monitoring device in the area of the lever, both for drum brakes and disc brakes, proves to be less complicated in terms of space requirements, assembly, cable fixation, inspection and overhaul.

Just as an example, when placing the sensor inside the brake drum, inspection and overhaul of the brake monitoring device with its sensor element requires the removal of the brake drum.

Both for applications in a disc brake and a drum brake the path of the repeated variations in a physical property can be arranged and located on a larger radius, due to less space constraints, which in turn enables a better sensing resolution, so that also less sophisticated and thus more inexpensive sensor elements can be used in this respect.

Moreover, when applying the repeated variations to the brake lever of a drum brake, it proves to be less costly to arrange the teeth or slots at the control arm or at the cover of the housing than at the end of the S-cam shaft, since these components are stamped and punched parts of sheet metal, so that the forming of the teeth or slots do no incur additional costs once the tooling has been made. Similar means at the end of the S-cam shaft would either call for a separate disc to be fixed to the S-cam shaft or for a more complicated and thus expensive machining or forging of the S-cam shaft.

One particular advantage of the brake monitoring device according to the invention is with respect to retrofitting. An existing brake lever can be very easily replaced with a lever equipped with a corresponding sensor element. On new vehicles of all types, the brake lever can be additionally equipped with the path of repeated variations at ignorable costs, e.g. by providing the toothed control arm, and then the additional sensor element only has to be easily mounted at a later stage on the vehicle assembly line.

Further advantages and embodiments do become apparent from the description of the different embodiments in connection with the enclosed drawings, in which
- Fig. 1: shows a brake lever assembly for a drum brake with its main components according to the state of the art;
- Fig. 2: shows a brake monitoring device according to the invention attached to a lever for a drum brake;
- Fig. 3: shows a sensor according to the invention;
- Fig. 4: shows the brake monitoring device according to the invention attached to a lever for a drum brake;
- Fig. 5: shows the brake monitoring device according to the invention attached to a lever for a drum brake;
- Fig. 6: shows the brake monitoring device according to the invention attached to a lever for a drum brake;
- Fig. 7: shows the brake monitoring device according to the invention attached to a lever for a drum brake;
- Fig. 8: shows a cross section of a disc brake principle; and
- Fig. 9: shows the brake monitoring device according to the invention for a disc brake.

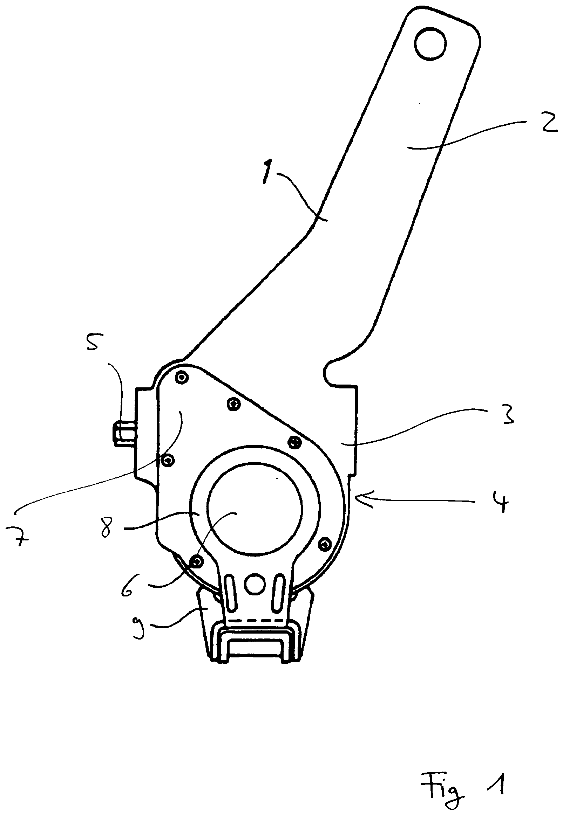

As an example, in Fig. 1 a self contained brake lever assembly for a drum brake is shown, as it is commonly used in the state of the art.

A lever 1 is made of cast iron and comprises an upper lever section 2 which attaches to a piston rod (not shown) of a hydraulic or pneumatic actuating cylinder. The upper lever section 2 descends into a lower lever section 3 with a housing 4 which receives an automatic slack adjuster mechanism 5 (partly shown by the end of a worm screw of said mechanism).

The slack adjuster mechanism 5 comprises, among other components, a worm screw and a worm wheel (not shown), the worm wheel being in connection with a S-cam shaft (not shown) via an opening 6 in the housing 4, as this is well known in the prior art. For further general information with respect to the configuration and function of such automatic slack adjusters it is e.g. referred to DE 195 34 854 A1 as previously mentioned.

The housing 4 is closed at least on one of its sides by a cover 7 made of sheet metal.

Furthermore, the automatic slack adjuster mechanism 5 of the lever 1 is connected with a control arm 8 which is attached to an adjacent underframe part, e.g. an anchor bracket 9, of the vehicle so as to provide a reference for the automatic slack adjuster mechanism 5.

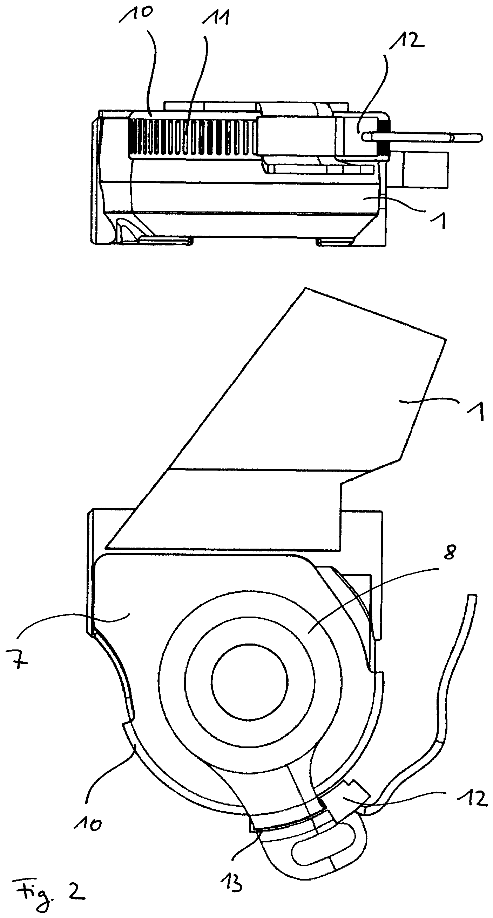

In Fig. 2 an exemplary embodiment of the brake monitoring device according to the invention is shown.

The cover 7 of housing 4 comprises at the end opposite to the upper lever section 2 an arc-shaped path 10. The path 10 is integral with the cover 7 at both sides of the housing 4.

The path 10 comprises repeated variations of a physical property, which is formed by geometric elements, namely a series of slots 11, which are equidistantly distributed around the arc-shaped path 10.

A sensor element 12 is fixed to the control arm 8 by means of a fixation element, e.g. such as a clip 13.

As it becomes apparent from the Fig. 2 the sensor element 12 remains stationary, while the path 10 with the slots 11 is travelling over the sensor element 12 upon rotation of the lever 1 during brake actuation or brake release.

According to the invention the sensor element 12 is configured to count the number of slots 11 thereby generating corresponding pulses.

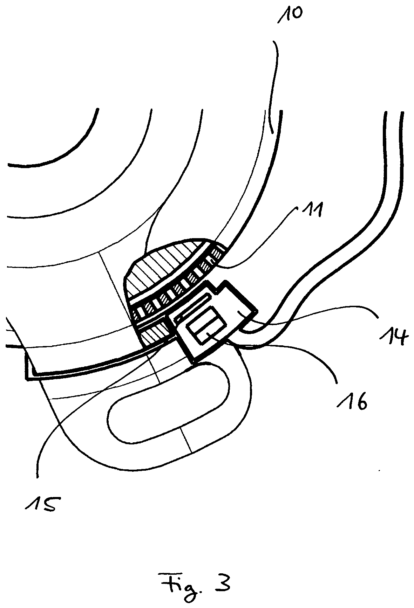

The sensor element 12 could be any kind of sensor which suits for the purpose of counting the number of slots 11. Most preferably, the sensor element 12 is a magnetic sensor, which could detect variations in the magnetic field resulting from the repeated variations of the slots 11, as this is shown in Fig. 3.

The sensor element 12 is formed by a self-contained housing 14 which housing 14 embeds a magnetic sensor 15, such as at least one Hall-element, and a magnet 16 located behind the sensor 15 opposite of path 10. The magnet 16 generates varying magnetic fields in accordance with the concentrated magnetic flux in the material portions between the slots 11 to be sensed by sensor 15, when the path 10 passes by.

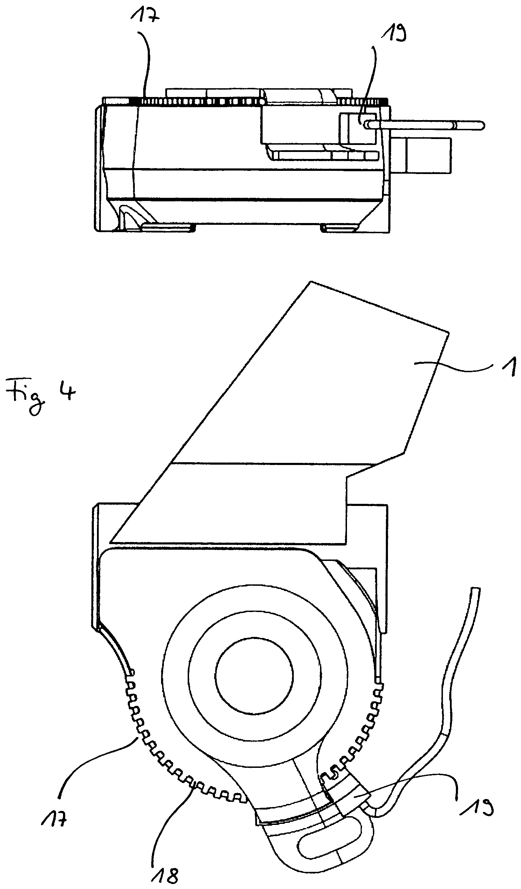

Fig. 4 shows an exemplary embodiment of the brake monitoring device according to the invention.

The cover 7 comprises opposite to the upper lever section 2 a path 17 which is formed by an arc-shaped series of teeth 18. The sensor element 19 is arranged at the control arm 8 laterally to the arc-shaped path 17 so that the teeth 18 pass by upon rotation of the lever 1 during brake actuation and brake release. Also here, the sensor element 19 is configured to generate and count pulses in accordance with the series of teeth 18.

The advantage of the previously described embodiments can be seen in an integrated manufacturing process. The cover 7 is made from sheet metal by way of punching, stamping and bending. Therefore, the provision of the path 10 with the slots 11 or the path 17 with teeth 18 can be already foreseen in the punching and stamping process for the cover 7, by additional bending, if required.

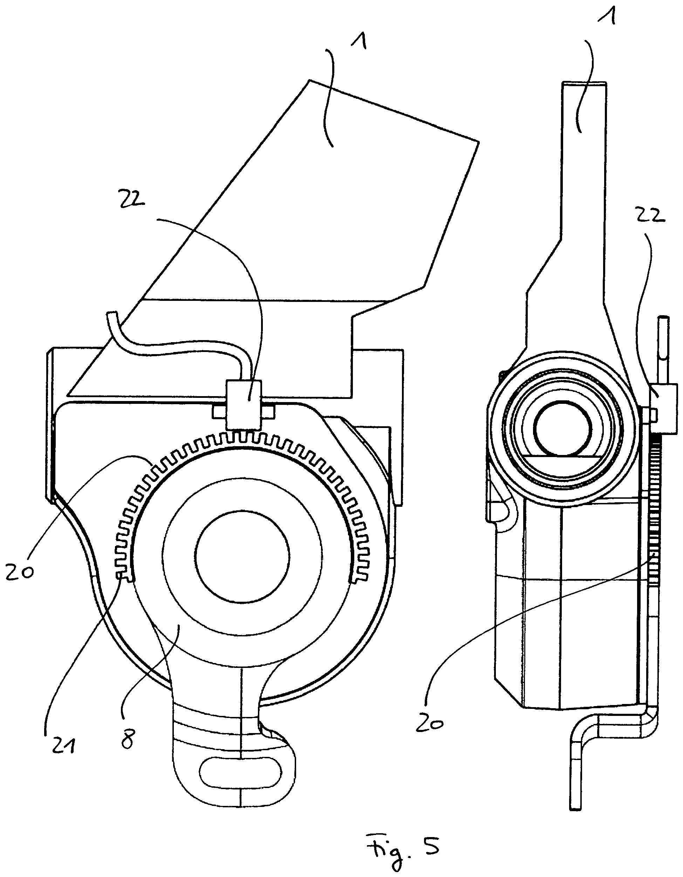

Fig. 5 shows an exemplary embodiment of the brake monitoring device according to the invention, in which the moving component with respect to the relative movement is put to the sensor side.

The control arm 8 comprises on its upper part facing the upper lever section 2 an arc-shaped path 20 with a series of teeth 21. Accordingly, the sensor element 22 has to be attached in a stationary manner to the housing 4 directly or to the cover 7 of the housing 4 of the lever 1. Upon rotation of the lever 1 during brake actuation and brake release the sensor element 22 travels over the stationary path 20 of the control arm 8.

In the present embodiment, the path 20 is either integral with the control arm 8 or could be made as a separate arc element to be attached to the control arm 8. This element could be also made from sheet metal by punching and stamping and could be welded or clued to the control arm 9.

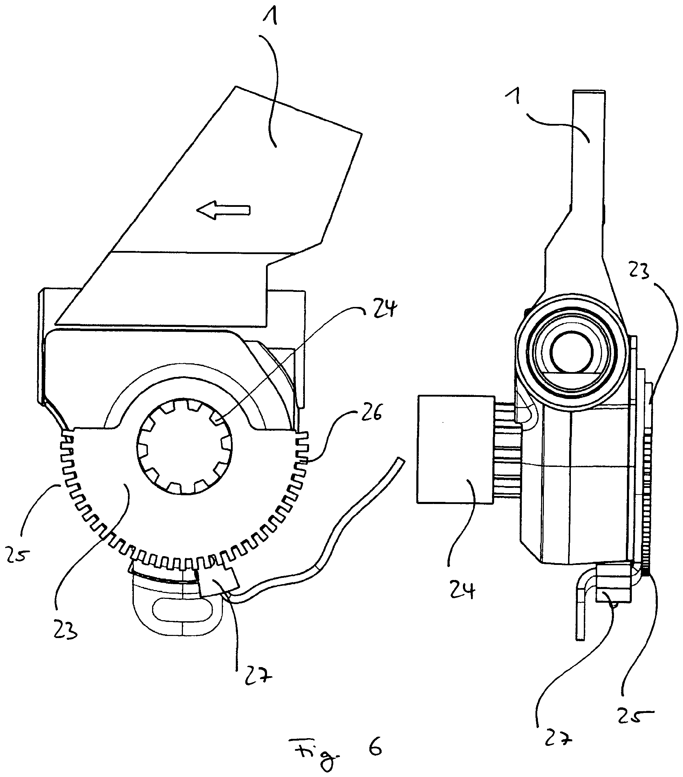

Fig. 6 shows an exemplary embodiment of the brake monitoring device according to the invention in which the path for the repeated variations of the physical property is provided as a separate element.

A plate 23 of sheet metal is rotatably fixed to an actuating camshaft 24 for the S-cam shaft, so as to rotate with the lever 1 upon brake actuation and brake release.

The plate 23 comprises a path 25 with a series of teeth 26. A sensor element 27 is attached to the control arm 8, accordingly.

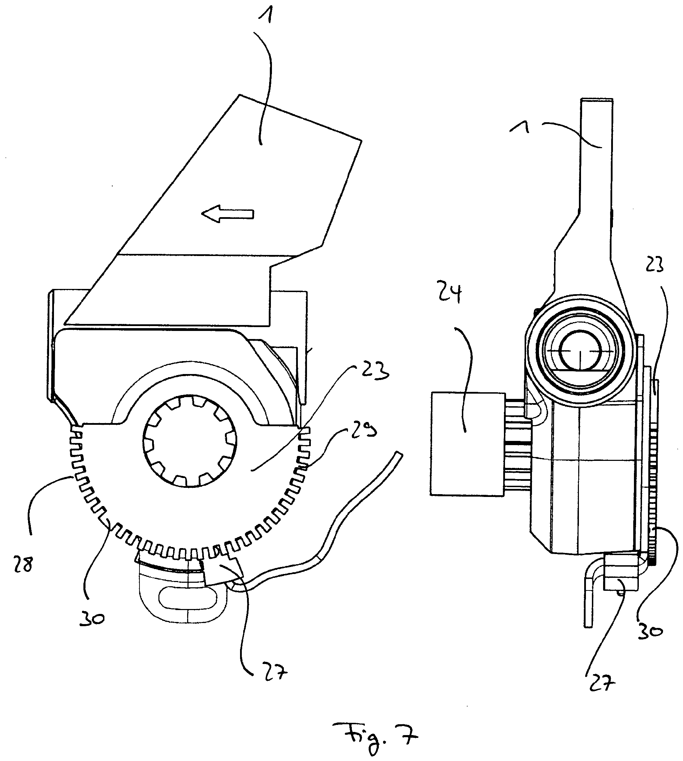

Fig. 7 shows an embodiment of the brake monitoring device according to the invention with an alternative configuration for the path of the repeated variations of the physical property.

The path 28 with the series of teeth 29 of the separate plate 23 comprises at a certain position an irregular variation 30, which corresponds to a tooth of double width.

The position for the extra broad tooth 30 is predefined and determines a position along the path 28 in which the rotation of the lever 1 reaches a critical value for the brake actuation or release stroke, e.g. with respect to lining wear.

When this feature is combined with an arrangement according to Fig. 6, the extra broad tooth 30 determines a position of critical value for the lining wear.

Accordingly, the irregular tooth 30 will provide a pulse of different strength so that the control unit realizes that the critical position has been reached and that service actions are required immediately.

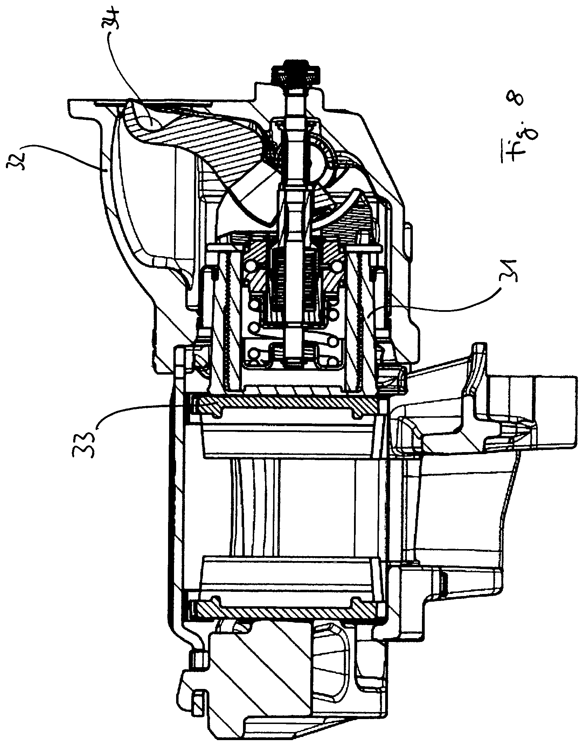

In Fig. 8 as an example a disc brake in cross section is shown, as this is known in the state of the art.

The disc brake comprises an actuating mechanism, as this is well known in prior art, containing a thrust element 31 displaceably guided in a caliper 32 forcing a brake pad 33 towards a brake disc (not shown) for brake engagement. The thrust element 31 is activated by a lever 34 which is rotatably supported in the rear end of the caliper 32.

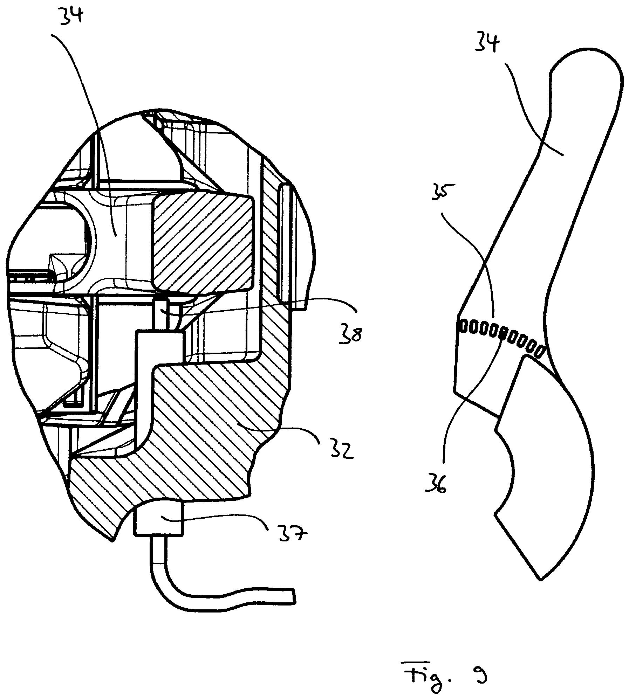

According to the invention, as can be seen in Fig. 9, the lever 34 comprises on its lateral side, i.e. parallel to the swivelling direction of the lever 34, an arc-shaped path 35 of repeated variations. These repeated variations could be formed as dents 36 in the surface of the lever 34, which can be formed during the casting of forging process.

A sensor element 37 is arranged inside the housing of the caliper 32 through an opening at a corresponding position so that the path 35 travels along a sensor head 38 of the sensor element 37 upon brake actuation and brake release. Also in this embodiment, the sensor element 37 is located substantially opposite of the heat intensive region near the brake disc.

## Claims

1. Brake monitoring device for detecting a value indicative of the actuation stroke and/or release stroke of a thrust element (31) of a brake actuating mechanism, the thrust element (31) being actuated by a lever (1;34) of said brake actuating mechanism, comprising a sensor (12; 19; 22; 27; 37) for sensing variations in a physical property of at least one part of said brake actuating mechanism, whereby the sensor (12; 19; 22; 27; 37) and said part of the brake actuating mechanism are arranged so that by the relative movement between said part of the brake actuating mechanism and the sensor (12; 19; 22; 27; 37) repeated variations in said physical property along a path (10; 17; 20; 28; 35) of said relative movement are sensed, **characterized in that** said path (10; 17; 20; 28; 35) of repeated variations in physical property is formed along one of the lever (1; 34) and a stationary part being adjacent to said lever.

2. Brake monitoring device according to claim 1, wherein the physical property for the repeated variations is selected from magnetic field, electric resistance, electric capacitance, electric inductance and/or surface structure.

3. Brake monitoring device according to one of claims 1 to 2, wherein said path (10; 17; 20; 28; 35) comprises repeated variations in geometry.

4. Brake monitoring device according to claim 3, wherein the repeated variations in geometry are formed by recesses (11) or by a series of teeth (18; 21; 26; 29).

5. Brake monitoring device according to claim 4, wherein at least one magnet (16) is arranged in the vicinity of the repeated variations so as to create a varying strength of a magnetic field for said repeated variations.

6. Brake monitoring device according to claims 1 to 2, wherein said path (10; 17; 20; 28; 35) comprises a series of permanent magnets.

7. Brake monitoring device according to one of claims 1 to 6, wherein the repeated variations are arranged on the lever (1; 34) and the sensor (12; 19; 22; 27; 37) is arranged on the stationary part being adjacent to said lever (1; 34).

8. Brake monitoring device according to one of claims 1 to 6, wherein the repeated variations are arranged on the stationary part being adjacent to said lever (1; 34) and the sensor (12; 19; 22; 27; 37) is arranged on the lever (1; 34).

9. Brake monitoring device according to claims 7 or 8, wherein said repeated variations are formed integral with the lever (1; 34) or with the stationary part being adjacent to said lever (1; 34); or
wherein said repeated variations are formed by a separate element to be attached to the lever (1; 34) or to the stationary part being adjacent to said lever (1; 34).

10. Brake monitoring device according to one of claims 1 to 9, wherein the stationary part being adjacent to said lever (1; 34) is a part of a self-contained brake lever assembly, of a caliper (32) or of an underframe part (9) of a vehicle.

11. Brake monitoring device according to one of claims 1 to 10, wherein the path (10; 17; 20; 28; 35) of the repeated variations comprises at least one additional irregular variation (30) for determining a particular position of the actuation and/or release stroke.

12. Brake monitoring device according to one of claims 1 to 11, wherein the path (10; 17; 20; 28; 35) is an arc-shaped path.

13. Drum brake comprising a brake monitoring device according to claims 1 to 12.

14. Drum brake according to claim 13, the drum brake comprising a lever (1) with a housing (4) for receiving an adjuster mechanism (5) in connection with a S-cam shaft and a control arm (8) for said adjuster mechanism (5), **characterized in that** the path (10; 17) is arranged at the cover (7) of the housing (4) opposite to a free end of the lever (1) and the sensor (12; 19) is attached to the control arm (8).

15. Drum brake according to claim 13, the drum brake comprising a lever (1) with a housing (4) for receiving an adjuster mechanism (5) in connection with a S-cam shaft and a control arm (8) for said adjuster mechanism (5), **characterized in that** the path (20) is arranged at the control arm (8) and the sensor (22) is attached to the cover (7) of the housing (4).

16. Brake lever of a brake actuating mechanism for a drum brake comprising a housing (4) for receiving an adjuster mechanism (5) in connection with a S-cam shaft and a control arm (8) for said adjuster mechanism (5), **characterized in that** the lever (1) comprises a path (10; 17) of repeated variations in a physical property.

17. Brake lever according to claim 16, wherein a cover (7) of the housing (4) comprises said path (10; 17) of repeated variations in a physical property.

18. Brake lever according to claim 16, wherein the control arm (8) comprises said path (20) of repeated variations in a physical property.

19. Disc brake comprising a brake monitoring device according to claims 1 to 12.

20. Disc brake according to claim 19, the disc brake comprising a brake actuating mechanism with a lever (34), **characterized in that** the repeated variations are arranged on a lateral surface of the lever (34).

21. Brake lever of a brake actuating mechanism for a disc brake, **characterized in that** the lever (34) comprises a path (35) or repeated variations in a physical property, wherein the lever (34) is made of cast iron or forged steel and said repeated variations are formed as dents (36) being integral with the cast iron or with the forged steel.

## Patentansprüche

1. Bremsüberwachungsvorrichtung zum Erfassen eines Wertes, der den Betätigungshub und/oder Lösehub eines Druckelements (31) eines Bremsbetätigungsmechanismus anzeigt, wobei das Druckelement (31) durch einen Hebel (1;34) des Bremsbetätigungsmechanismus betätigt wird, aufweisend einen Sensor (12,19;22;27;37) zum Erfassen von Variationen einer physikalischen Eigenschaft von mindestens einem Teil des Bremsbetätigungsmechanismus, wobei der Sensor (12;19;22;27;37) und das Teil des Bremsbetätigungsmechanismus so angeordnet sind, dass durch die Relativbewegung zwischen dem Teil des Bremsbetätigungsmechanismus und dem Sensor (12;19;22;27;37) wiederholte Variationen der physikalischen Eigenschaft entlang eines Pfades (10;17;20;28;35) der Relativbewegung erfasst werden, **dadurch gekennzeichnet, dass** der Pfad (10;17;20;28;35) mit den wiederholten Variationen der physikalischen Eigenschaft entlang dem Hebel (1;34) und/oder entlang einem stationären Teil, das an den Hebel (1;34) angrenzt, ausgebildet ist.

2. Bremsüberwachungsvorrichtung nach Anspruch 1, bei der die physikalische Eigenschaft für die wiederholten Variationen ausgewählt ist aus einem Magnetfeld, einem elektrischen Widerstand, einer elektrischer Kapazität, einer elektrischer Induktivität und/oder einer Oberflächenstruktur.

3. Bremsüberwachungsvorrichtung nach einem der Ansprüche 1 bis 2, bei der der Pfad (10;17;20;28;35) wiederholte Variationen in Bezug auf die Geometrie aufweist.

4. Bremsüberwachungsvorrichtung nach Anspruch 3, bei der die wiederholten Variationen in Bezug auf die Geometrie durch Aussparungen (11) oder durch eine Reihe von Zähnen (18;21;26;29) gebildet werden.

5. Bremsüberwachungsvorrichtung nach Anspruch 4, bei der mindestens ein Magnet (16) in der Nähe der wiederholten Variationen angeordnet ist, um eine unterschiedliche Stärke eines Magnetfeldes für die wiederholten Variationen zu erzeugen.

6. Bremsüberwachungsvorrichtung nach den Ansprüchen 1 bis 2, bei der der Pfad (10;17;20;28;35) eine Reihe von Permanentmagneten aufweist.

7. Bremsüberwachungsvorrichtung nach einem der Ansprüche 1 bis 6, bei der die wiederholten Variationen am Hebel (1;34) angeordnet sind und der Sensor (12;19;22;27;37) an dem stationären Teil angeordnet ist, das an den Hebel (1;34) angrenzt.

8. Bremsüberwachungsvorrichtung nach einem der Ansprüche 1 bis 6, bei der die wiederholten Variationen an dem stationären Teil angeordnet sind, das an den Hebel (1;34) angrenzt, und der Sensor (12;19;22;27;37) an dem Hebel (1;34) angeordnet ist.

9. Bremsüberwachungsvorrichtung nach Anspruch 7 oder 8, bei der die wiederholten Variationen integral mit dem Hebel (1;34) oder mit dem stationären Teil ausgebildet sind, das an den Hebel (1;34) angrenzt; oder
bei der die wiederholten Variationen durch ein separates Element gebildet werden, das an dem Hebel (1;34) oder an dem stationären Teil befestigbar ist, das an den Hebel (1;34) angrenzt.

10. Bremsüberwachungsvorrichtung nach einem der Ansprüche 1 bis 9, bei der das stationäre Teil, das an den Hebel (1;34) angrenzt, ein Teil einer eigenständigen Bremshebelanordnung, eines Bremssattels (32) oder eines Untergestellteils (9) eines Fahrzeugs ist.

11. Bremsüberwachungsvorrichtung nach einem der Ansprüche 1 bis 10, bei der der Pfad (10;17;20;28;35) mit den wiederholten Variationen mindestens eine zusätzliche unregelmäßige Variation (30) zum Bestimmen einer bestimmten Position des Betätigungs- und/oder Lösehubs aufweist.

12. Bremsüberwachungsvorrichtung nach einem der Ansprüche 1 bis 11, bei der der Pfad (10;17;20;28;35) ein bogenförmiger Pfad ist.

13. Trommelbremse mit einer Bremsüberwachungsvorrichtung nach den Ansprüchen 1 bis 12.

14. Trommelbremse nach Anspruch 13, bei der die Trommelbremse einen Hebel (1) mit einem Gehäuse (4) zur Aufnahme eines Nachstellmechanismus (5) in Verbindung mit einer S-Nockenwelle und einen Steuerarm (8) für den Nachstellmechanismus (5) aufweist, **dadurch gekennzeichnet, dass** der Pfad (10;17) an einer Abdeckung (7) des Gehäuses (4) gegenüber einem freien Ende des Hebels (1) angeordnet ist und der Sensor (12;19) an dem Steuerarm (8) befestigt ist.

15. Trommelbremse nach Anspruch 13, bei der die Trommelbremse einen Hebel (1) mit einem Gehäuse (4) zur Aufnahme eines Nachstellmechanismus (5) in Verbindung mit einer S-Nockenwelle und einen Steuerarm (8) für den Nachstellmechanismus (5) aufweist, **dadurch gekennzeichnet, dass** der Pfad (20) am Steuerarm (8) angeordnet ist und der Sensor (22) an der Abdeckung (7) des Gehäuses (4) befestigt ist.

16. Bremshebel eines Bremsbetätigungsmechanismus für eine Trommelbremse mit einem Gehäuse (4) zur Aufnahme eines Nachstellmechanismus (5) in Verbindung mit einer S-Nockenwelle und einem Steuerarm (8) für den Nachstellmechanismus (5), **dadurch gekennzeichnet, dass** der Hebel (1) einen Pfad (10;17) mit wiederholten Variationen einer physikalischen Eigenschaft aufweist.

17. Bremshebel nach Anspruch 16, bei der eine Abdeckung (7) des Gehäuses (4) den Pfad (10;17) mit wiederholten Variationen einer physikalischen Eigenschaft aufweist.

18. Bremshebel nach Anspruch 16, bei der der Steuerarm (8) den Pfad (20) mit wiederholten Variationen einer physikalischen Eigenschaft aufweist.

19. Scheibenbremse mit einer Bremsüberwachungsvorrichtung nach den Ansprüchen 1 bis 12.

20. Scheibenbremse nach Anspruch 19, bei der die Scheibenbremse einen Bremsbetätigungsmechanismus mit einem Hebel (34) aufweist, **dadurch gekennzeichnet, dass** die wiederholten Variationen auf einer Seitenfläche des Hebels (34) angeordnet sind.

21. Bremshebel eines Bremsbetätigungsmechanismus für eine Scheibenbremse, **dadurch gekennzeichnet, dass** der Hebel (34) einen Pfad (35) mit wiederholten Variationen einer physikalischen Eigenschaft aufweist, wobei der Hebel (34) aus Gusseisen oder Schmiedestahl hergestellt ist und die wiederholten Variationen als Vertiefungen (36) ausgebildet sind, die integral mit dem Gusseisen oder mit dem Schmiedestahl ausgebildet sind.

## Revendications

1. Dispositif de surveillance de frein pour détecter une valeur indicative de la course d'actionnement et/ou de la course de libération d'un élément de poussée (31) d'un mécanisme d'actionnement de frein, l'élément de poussée (31) étant actionné par un levier (1;34) dudit mécanisme d'actionnement de frein, comprenant un capteur (12;19;22;27;37) destiné à détecter des variations d'une propriété physique d'au moins une partie dudit mécanisme d'actionnement de frein, de telle sorte que le capteur (12;19;22;27;37) et ladite partie du mécanisme d'actionnement de frein sont agencés de sorte que, par le déplacement relatif entre ladite partie du mécanisme d'actionnement de frein et le capteur (12;19;22;27;37), des variations répétées de ladite propriété physique le long d'un trajet (10;17;20;28;35) dudit déplacement relatif sont détectées, **caractérisé en ce que** ledit trajet (10;17;20;28;35) de variations répétées de la propriété physique est formé le long de l'un du levier (1;34) et d'une partie stationnaire adjacente audit levier.

2. Dispositif de surveillance de frein selon la revendication 1, dans lequel la propriété physique pour les variations répétées est choisie parmi un champ magnétique, une résistance électrique, une capacité électrique, une inductance électrique et/ou une structure de surface.

3. Dispositif de surveillance de frein selon l'une des revendications 1 à 2, dans lequel ledit trajet (10;17;20;28;35) comprend des variations répétées de géométrie.

4. Dispositif de surveillance de frein selon la revendication 3, dans lequel les variations répétées de géométrie sont formées par des évidements (11) ou par une série de dents (18;21;26;29).

5. Dispositif de surveillance de frein selon la revendication 4, dans lequel au moins un aimant (16) est agencé à proximité des variations répétées de manière à créer une intensité variable d'un champ magnétique pour lesdites variations répétées.

6. Dispositif de surveillance de frein selon les revendications 1 à 2, dans lequel ledit trajet (10;17;20;28;35) comprend une série d'aimants permanents.

7. Dispositif de surveillance de frein selon l'une des revendications 1 à 6, dans lequel les variations répétées sont agencées sur le levier (1;34) et le capteur (12;19;22;27;37) est agencé sur la partie stationnaire adjacente audit levier (1;34).

8. Dispositif de surveillance de frein selon l'une des revendications 1 à 6, dans lequel les variations répétées sont agencées sur la partie stationnaire adjacente audit levier (1;34) et le capteur (12;19;22;27;37) est agencé sur le levier (1;34).

9. Dispositif de surveillance de frein selon les revendications 7 ou 8, dans lequel lesdites variations répétées sont formées d'un seul tenant avec le levier (1;34) ou avec la partie stationnaire adjacente audit levier (1;34) ; ou
dans lequel lesdites variations répétées sont formées par un élément séparé destiné à être fixé au levier (1;34) ou à la partie fixe adjacente audit levier (1;34) .

10. Dispositif de surveillance de frein selon l'une des revendications 1 à 9, dans lequel la partie fixe adjacente audit levier (1;34) fait partie d'un ensemble de levier de frein auto-contenu, d'un étrier (32) ou d'une partie de sous-châssis (9) d'un véhicule.

11. Dispositif de surveillance de freinage selon l'une des revendications 1 à 10, dans lequel le trajet (10;17;20;28;35) des variations répétées comprend au moins une variation irrégulière supplémentaire (30) pour déterminer une position particulière de la course d'actionnement et/ou de libération.

12. Dispositif de surveillance de frein selon l'une des revendications 1 à 11, dans lequel le trajet (10;17;20;28;35) est un trajet en forme d'arc.

13. Frein à tambour comprenant un dispositif de surveillance de frein selon les revendications 1 à 12.

14. Frein à tambour selon la revendication 13, le frein à tambour comprenant un levier (1) avec un boîtier (4) destiné à recevoir un mécanisme d'ajustement (5) en liaison avec un arbre à came en S et un bras de commande (8) pour ledit mécanisme d'ajustement (5), **caractérisé en ce que** le trajet (10;17) est agencé sur le couvercle (7) du boîtier (4) opposé à une extrémité libre du levier (1) et le capteur (12;19) est fixé au bras de commande (8).

15. Frein à tambour selon la revendication 13, le frein à tambour comprenant un levier (1) avec un boîtier (4) destiné à recevoir un mécanisme d'ajustement (5) en liaison avec un arbre à came en S et un bras de commande (8) pour ledit mécanisme d'ajustement (5), **caractérisé en ce que** le trajet (20) est disposé au niveau du bras de commande (8) et le capteur (22) est fixé au couvercle (7) du boîtier (4).

16. Levier de frein d'un mécanisme d'actionnement de frein pour frein à tambour comprenant un boîtier (4) destiné à recevoir un mécanisme d'ajustement (5) en liaison avec un arbre à came en S et un bras de commande (8) pour ledit mécanisme d'ajustement (5), **caractérisé en ce que** le levier (1) comprend un trajet (10;17) de variations répétées d'une propriété physique.

17. Levier de frein selon la revendication 16, dans lequel un couvercle (7) du boîtier (4) comprend ledit trajet (10;17) de variations répétées d'une propriété physique.

18. Levier de frein selon la revendication 16, dans lequel le bras de commande (8) comprend ledit trajet (20) de variations répétées d'une propriété physique.

19. Frein à disque comprenant un dispositif de surveillance de frein selon les revendications 1 à 12.

20. Frein à disque selon la revendication 19, le frein à disque comprenant un mécanisme d'actionnement de frein avec un levier (34), **caractérisé en ce que** les variations répétées sont agencées sur une surface latérale du levier (34).

21. Levier de frein d'un mécanisme d'actionnement de frein pour frein à disque, **caractérisé en ce que** le levier (34) comprend un trajet (35) de variations répétées d'une propriété physique, dans lequel le levier (34) est réalisé en fonte ou en acier forgé et lesdites variations répétées sont formées en tant que dents (36) d'un seul tenant avec la fonte ou l'acier forgé.
